# EUROPEAN PATENT SPECIFICATION

(11) **EP 1 758 408 B1**
(45) Date of publication and mention of the grant of the patent: **13.06.2012**
(21) Application number: 05811909.0
(22) Date of filing: 11.11.2005
(51) Int. Cl.: H04W 4/06

(54) **METHODS, SYSTEM AND USER EQUIPMENT FOR RECEIVING MULTIMEDIA BROADCAST/MULTICAST SERVICE CONTROL INFORMATION**
VERFAHREN, SYSTEM UND BENUTZGERÄT ZUM EMPFANGEN VON MULTIMEDIA-BROADCAST/MULTICAST-SERVICE-STEUERUNGSINFORMATION
PROCEDES, SYSTEME ET EQUIPEMENT UTILISATEUR DE RECEPTION D INFORMATIONS DE COMMANDE DE DIFFUSION MULTIMEDIA OU DE SERVICE MULTIDIFFUSION

(30) Priority: 28.03.2005 CN 200510056880
(43) Date of publication of application: 28.02.2007
(73) Proprietor: Huawei Technologies Co., Ltd., Longgang District, Shenzhen Guangdong 518129 (CN)
(72) Inventor: DING, Yingzhe, Huawei Administration Building, Guangdong 518129 (CN)
(74) Representative: Thun, Clemens
(86) International application number: PCT/CN2005/001906
(87) International publication number: WO 2006/102807

(56) References cited:
- EP-A- 1 509 056
- WO-A1-2005/015776
- CN-A- 1 371 576
- US-A- 5 404 355

## Description

### Field of the Technology

The present invention relate to the technique of information receiving, and more particularly to a method and a system for receiving Multimedia Broadcast/Multicast Service (MBMS) control information, and a User Equipment (UE) thereof.

### Background of the Invention

Multicast and broadcast are the techniques for transferring data from one data source to a plurality of targets. In conventional mobile communication networks, Cell Multicast Service or Cell Broadcast Service (CBS) allows the low bit rate data to be transferred to all subscribers through broadcast channels shared by cells; this kind of service belongs to the message service.

Nowadays, simple telephone and message services can no longer meet subscribers' requirements for mobile communication; sharp development of Internet has brought out many new diversified mobile multimedia services. Wherein, some mobile multimedia services such as Video on demand (VOD), TV Broadcasting, Video Conference, online education and interactive game etc., require that several subscribers receive an identical data simultaneously. Compared with common data services, these mobile multimedia services have the properties of large data flow, long duration and delay-sensitivity, etc. The current Internet protocol (IP) multicast and broadcast techniques can only be applied to wired IP communication network rather than mobile communication networks, because the mobile communication network has special network architecture, function entity and radio interface, which are different from those of wired communication IP network.

In order to make full use of Mobile Communication network resources, 3rd Generation Partnership Project (3GPP) introduces the concept of multicast and broadcast (MBMS), and thereby provides Point to Multipoint (PTM) service where one data source transfers data to a plurality of targets in Mobile Communication network, in order to share network resources and increase Utilization Ratio of network resources especially air interface resource. The MBMS defined by 3GPP can implement not only multicast and broadcast of low speed messages such as plain text, but also multicast and broadcast of high speed multimedia services, which undoubtedly meets the requirements of future mobile data development.

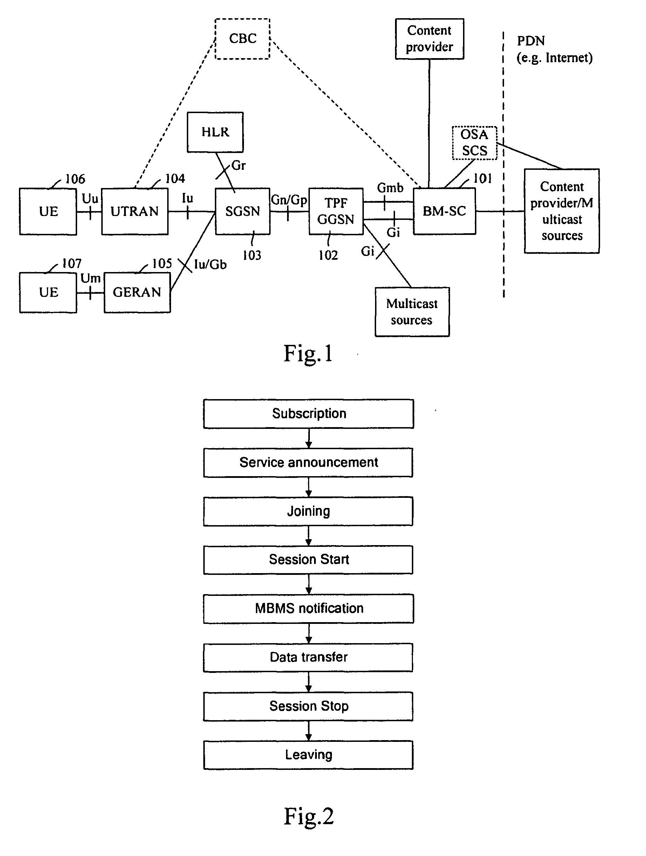

Fig.1 is a schematic diagram illustrating architecture of a radio network that supports Broadcast/Multicast service, as shown in Fig. 1, an entity of the radio network that supports Broadcast/Multicast service is a Broadcast/Multicast service server (BM-SC) 101, and the BM-SC 101 connect to a TPF GGSN (Gateway GPRS Support Node) 102 through a Gmb interface or a Gi interface, one BM-SC 101 can connect to a plurality of TPF GGSNs 102; the TPF GGSN 102 connect to a SGSN (Serving GPRS Support Node) 103 via a Gn/Gp interface, one GGSN 102 can connect to a plurality of SGSNs 103; the SGSN 103 can connect to a UTRAN (Universal Terrestrial Radio Access Network) 104 of Universal Mobile Telecommunication System (UMTS) through an Iu interface, and the UTRAN 104 connects to a UE 106 via a Uu interface, the SGSN 103 can also connect to a GSM (Global System of Mobile communication) GERAN (GSM/EDGE Radio Access Network) 105 through the Iu/Gb interface, and the GERAN 105 further connects to a User Equipment (UE)107 via a Um interface. Wherein, both the GGSN and the SGSN are nodes of Core Network (CN) in the radio network.

According to the Fig.1, in order to support MBMS service, the Broadcast/Multicast Service Center, i.e. the BM-SC 101 is introduced into 3G Mobile Communication system, the BM-SC 101 is the entrance of the content providers, which can be used for authorization and initiating MBMS bearer service in the radio networks and transferring the MBMS content according to a preset schedule. The functions related to MBMS have been added into the function entities such as UE, UTRAN, GERAN, SGSN and GGSN etc.

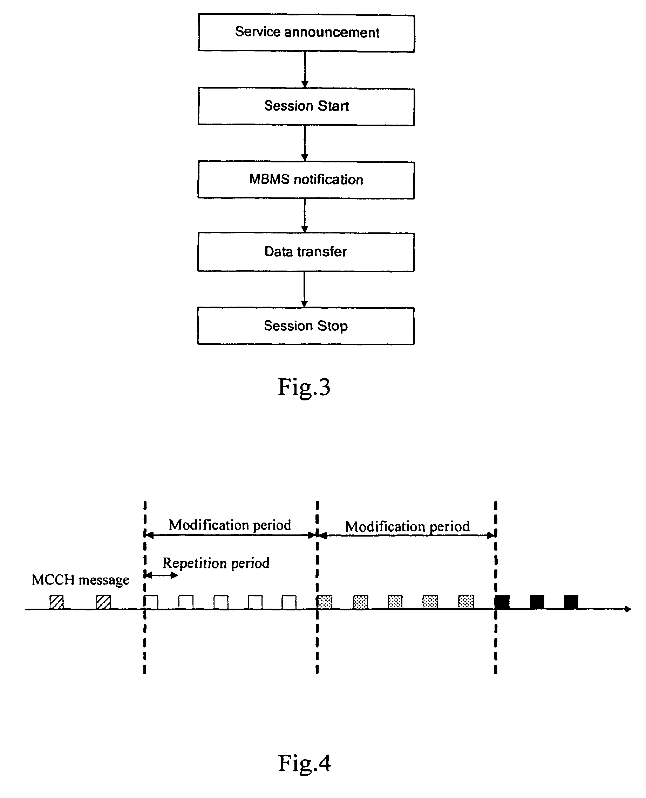

MBMS includes a multicast mode and a broadcast mode, wherein, the multicast mode requires users to subscribe to a Multicast group, activate the services and generate the corresponding charge information. AS the service requirement of the multicast mode and broadcast mode is different, the operation is different in the two modes, as shown in Fig.2 and Fig.3. Fig.2 is a schematic flowchart illustrating operation in the MBMS Multicast mode, while Fig.3 is a schematic flowchart illustrating operation in the MBMS Broadcast mode.

As shown in Fig 2, the operation in the MBMS Multicast service includes: Subscription, Service announcement, Joining, Session Start, MBMS notification, Data transfer, Session Stop and Leaving. Wherein, a UE can pre-subscribe desired MBMS services in the Subscription step; the BM-SC can announce currently available services in the Service announcement step; Joining step is the activating procedure of the MBMS multicast service, during the joining step, the UE informs the network its willingness to be a member of current multicast group and accepts multicast data of corresponding services, the joining step generates MBMS UE context in the network and UE that joined the multicast group to record the UE information; in Session Start step, the BM-SC prepares data for transferring, and informs the network to establish bearer resource related to the CN and the RAN; during the MBMS notification step, the UE is notified that the MBMS multicast session will start; during Data transfer step, the BM-SC transfers data to the UE through the bearer resource established in the Session Start step, the MBMS service has two modes when transferring between UTRAN and UE: Point To Multipoint (PTM) mode and Point To Point (PTP) mode, wherein, in the PTM mode, identical data is transferred through MTCH(MBMS PTM service channel), and all UEs subscribing to the Multicast service or interesting in Broadcast service can receive it. In the PTP mode, the data is transferred via DTCH (dedicated service channel) and only one corresponding UE can receive it; in the Session Stop step, the bearer resource established in Session Start step is released; in the Leaving step, the subscribers in the group leave the multicast group, not accept Multicast data, and the corresponding MBMS UE context is deleted in the step.

Referring to Fig.3, processing procedure of the MBMS Broadcast service is similar to it of the MBMS Multicast service; however, the Subscription process, the Joining process and the Leaving process are not performed.

In MBMS PTM transfer mode, the relevant radio control information includes service information, access information, radio bearer information and Frequency Layer Convergence (FLC) information, which are transferred by Radio Resource Control (RRC) through logical channel, such as MBMS PTM Control Channel (MCCH). MCCH information is transferred based on fixed scheduling, and for improving reliability, the UTRAN repeats transferring the MCCH information. Fig.4 is a schematic illustrating transfer scheduling of the MCCH information, as shown in Fig.4, the square blocks in the Fig.4 is the MCCH information. The MCCH information is divided into Critical Information (Critical Info) and non-critical Information, wherein, the Critical Information includes MBMS neighboring cell information, MBMS service information and MBMS radio bearer information. The complete MCCH information can be transferred repeatedly in a repetition period during which the MCCH information is transferred. The content transferred in one repetition period can not be modified. The MCCH information can be modified when it is transferred firstly in a modification period. The length of a modification period is defined as N times of the repetition period, N is an integer. The MCCH information is modified in each modification period. Non-critical Information refers to MBMS access information that needs no transfer repeatedly and can be modified at any time. The MBMS access information can be transferred periodically in an access information cycle, wherein, the length of the access information cycle is 1/M of the repetition period, M is an integer.

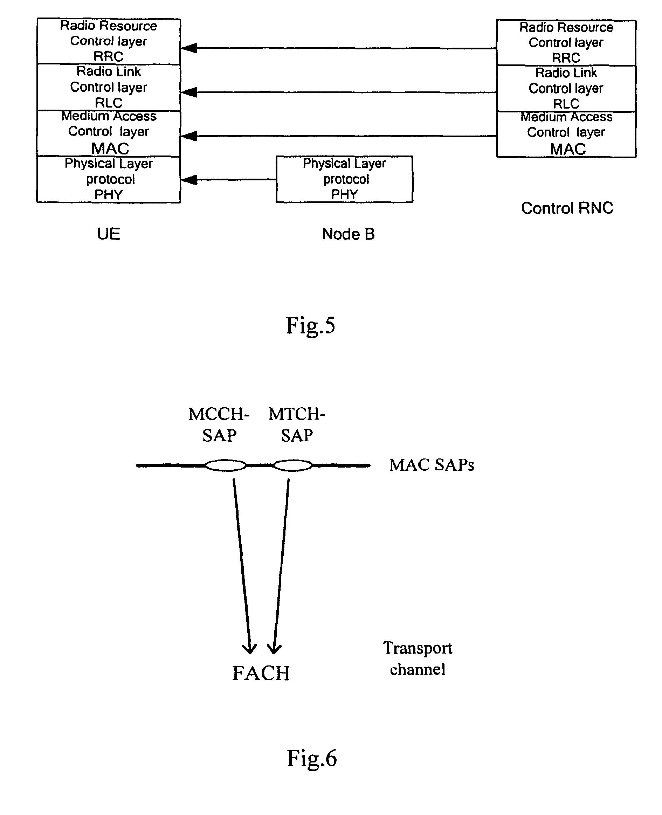

Protocol Stack structure of the MCCH is shown in Fig.5, Protocol units of the MCCH listed from top to bottom as follows: the RRC layer, the Radio Link Control layer (RLC), the Medium Access Control layer (MAC) and the Physical Layer (PHY). Wherein, mapping relationship between the logical channel of the MAC layer and the FACH (Forward Access Channel) of the Physical Layer is shown in Fig.6, in the prior system, the MCCH information i.e. the MBMS control information was mapped to FACH to transmitting.

The RLC layer employs Unacknowledged Mode (UM) to transfer the MCCH information, the data transferring process in the prior UM includes the transferring of a Sender RLC UM entity, and the receiving of a Receiver RLC UM entity. The Protocol Data Unit (PDU) can be transferred in the transfer interval, and the MAC determines the size and number of the PDU within the transfer interval. During the transferring process, the Sender performs segmentation and concatenation on a Service Data Unit (SDU) that the upper layer sends according to the size of the PDU, and the Receiver re-assembles corresponding SDU based on the received PDU. According to the prior art, an out-of-sequence delivery function of the SDU delivery function is added to the RLC, the out-of-sequence delivery function refers to the function of retransferring any assigned PDU has been sent before, according to the instruction.

According to the protocol in the 3GPP TS 25.331, the MCCH configuration information which is also called RLC configuration information is transferred in a System Information Block type 5 or 5bis by the UTRAN. After receiving the MCCH configuration information, the UE receives the corresponding MCCH information according to the Secondary Primary Common Control Physical Channel (Secondary CCPCH), the (FACH) and RLC information configuration Physical Channel, transport Channel (T-CH), and RLC entity in the MCCH configuration information. In prior art, the system information block is used for transferring system information of cell broadcast, according to difference in the logic functions, the system information block can be the scheduling block, the System Information Block type 1, System Information Block type 2,..., System Information Block type 5 and 5bis etc. Each system information block corresponds to one value tag which is the version number of the information for determining whether the relevant system information is changed. Generally, once any field of the system information block changes, the value tag will change correspondingly. Wherein, the MCCH configuration information includes diversified configuration information such as out-of-sequence delivery configuration information etc, the system information block is included in the scheduling information of the major information block corresponding to each cell.

When the UE reselects a new cell or the paging received from the UTRAN indicates that the system information of broadcast changes, the UE reads the system information of broadcast. The UE reads the System Information Block type 5 or 5bis on the following conditions: ① when the value tag of the system information block in the scheduling information read by the UE is different with the value tag that the UE stored for the system information block; ②the UE has not stored the system information block and its value tag. Correspondingly, after reading the System Information Block type 5 or 5bis, the UE store the system information block and its corresponding value tag, and re-establish the RLC entity according to the information in the system information block.

When the MCCH configuration information in the System Information Block type 5 or 5bis read by the UE has out-of-sequence delivery configuration information, the UE uses the parameters in the out-of-sequence delivery configuration information to configure the corresponding re-established RLC entity in order to use out-of-sequence delivery function.

European Patent Application EP1509056 discloses a method for selecting a cell. In the method, the cell is selected for an MBMS service in a mobile communication system which supports the MBMS service with different frequency in the same area. And in the method, the radio network controller (RNC) transmits a system information block (SIB) to a UE, wherein the SIB includes identification information indicating whether a neighbor cell is available for the MBMS service, and the UE performs cell reselection to an MBMS cell using the SIB.

The defect of prior technical scheme is as the following.
1) when the UE reselects a new cell, the SDU is possible to be re-assembles by error. Specifically speaking, in the standard of the 3GPP TS 25.331, when the value tag of the system information block read from the scheduling information is different with the value tag stored in the UE for the system information block, or the UE does not store the system information block and its value tag of the scheduling information, the UE will read the system information. However, when the UE has saved a system information block and value tag, and simultaneously, the value tag of the system information block read from the scheduling information is the same with the value tag stored in the UE, the UE does not read the system information block, nor make any actions according to content of the system information block.
   Supposing that the UE selects from a cell A to a cell B, and has saved system information block and its value tag that is corresponding to the cell B, then the UE can find that the value tag it read from broadcast channel is just the same with the value tag it saved, therefore, the UE will no longer read the system information block, instead, it will continue to use MCCH RLC UM entity that it uses in the cell A to receive and dispose MCCH information in the cell B. In this case, there can be unsettled MCCH information of the cell A buffered in the MCCH RLC UM entity, which can combine MCCH information of the cell A and the cell B while re-establishing SDU, and thereby result in inaccurate re-established SDU.
2) There is no mechanism to inform the UE to re-establish MCCH RLC, which makes it inconvenient to use.

An example can be found in EP-A-1509056.

### Summary of the Invention

The embodiment of the present invention provides a method for receiving MBMS control information in order to facilitate a UE to reselect new cell for establishing RLC entity in time, and further guaranteeing correct processing of subsequent messages.

The embodiment of present invention also provides a method for receiving MBMS control information in order to enable a UE to configure or re-establish RLC entity in time when a configure information changes, and further optimizing reestablishment mechanism of RLC entity. The embodiment of the present invention also provides a system for receiving MBMS control information, and a UE thereof.

The technical scheme of the embodiment of present invention is implemented as follows.

A method for receiving MBMS control information includes the following characterized procedures:
selecting, by a User Equipment, UE, a new cell;
checking, by the UE, whether content of a system information block transferred from a network side in a broadcast channel is changed;
if the content of the system information block transferred from the network side is not changed, obtaining the RLC configuration information of a system information block stored in the UE as RLC configuration information which is available to the new cell;
if the content of the system information block transferred from the network side is changed, reading and storing the system information block transferred from the network side, and making the RLC configuration information in the system information block transferred from the network side as the RLC configuration information which is available to the new cell; and
re-establishing, by the UE, an RLC receiving entity according to the RLC configuration information which is available to the new cell.

A method for receiving MBMS control information, the method includes the following characterized procedures:
receiving, by a UE, RLC configuration information included in a system
information block transferred from a network side in a broadcast channel;
configuring, by the UE, an RLC receiving entity according to out-of-sequence delivery configuration information, when the UE does not select a new cell, and the out-of-sequence delivery configuration information within the RLC configuration information is changed.

A system for receiving MBMS control information includes a network side and a UE;
the network side has means configured to transfer a system information block in a broadcast channel, the system information block includes RLC configuration information;
the UE has means configured to, if the UE selects a new cell, obtain the RLC configuration information which is available to the new cell from a system information block stored in the UE if the content of a system information block transferred from a network side is not changed; read and store the system information block transferred from the network side, and make RLC configuration information in the system information block transferred from the network side as the RLC configuration information which is available to the new cell, if the content of the system information block transferred from the network side is changed; and re-establish an RLC receiving entity according to the RLC configuration information which is available to the new cell; or configured to receive the RLC configuration information included in the system information block transferred from the network side if the UE does not select a new cell and out-of-sequence delivery configuration information within the RLC configuration information is changed, and configure the RLC receiving entity according to the received out-of-sequence delivery configuration information.

A UE for receiving MBMS control information includes:
means for receiving RLC configuration information;
means for obtaining the RLC configuration information which is available to a new cell from the received RLC configuration information;
means for configureing an RLC receiving entity; and
wherein if the UE does not select a new cell and out-of-sequence delivery configuration information within the RLC configuration information is changed, configuring the RLC receiving entity according to the out-of-sequence delivery configuration information.

A User Equipment, UE, for receiving Multimedia Broadcast/Multicast Service, MBMS, control information, includes:
means for selecting a new cell;
means for checking whether content of a system information block transferred from a network side is changed when selecting the new cell;
means for obtaining RLC configuration information of the system information block stored in the UE as RLC configuration information which is available to the new cell, if checking that the content of the system information block transferred from the network side is not changed; and
means for reading and storeing the system information block transferred from the network side, and makeing RLC configuration information in the system information block transferred from the network side as the RLC configuration information which is available to the new cell, if checking that the content of the system information block transferred from the network side is changed;
means for re-establishing an RLC receiving entity according to the RLC configuration information which is available to the new cell obtained by the third or fourth unit.

In the technical schemes for receiving MBMS control information, when the UE has reselected new cell or RLC configuration information has changed, an RLC receiving entity can be re-established or re-configured in good time, thereby, it can not only avoid the inaccurate RLC SDU resulting from re-establishment of the PDU that contains new cell MCCH information and the PDU that contains original cell MCCH information, but also clear buffer in good time; moreover, it can also reduce unnecessary re-establishment of RLC entity, which can further optimize RLC entity re-establishment mechanism.

### Brief Description of the Drawings

Fig.1 is a schematic diagram illustrating architecture of a radio network that supports Broadcast/Multicast service.
Fig.2 is a schematic flowchart illustrating operation in MBMS Multicast mode.
Fig.3 is a schematic flowchart illustrating operation in MBMS Broadcast mode.
Fig.4 is a schematic diagram illustrating scheduling and transferring of MCCH information.
Fig.5 is a schematic diagram illustrating a Protocol Stack structure of a MCCH.
Fig.6 is a schematic diagram illustrating mapping relationship between a logical channel of a MAC layer and a FACH channel of a Physical Layer.
Fig.7 is a schematic flowchart illustrating a method of the first embodiment in accordance with the present invention.
Fig.8 is a schematic flowchart illustrating a method of the second embodiment in accordance with the present invention.

### Detailed Description of the Invention

According to the embodiment of the present invention, when the UE reselects the new cell or the out-of-sequence delivery configuration information changes, a receiving entity is re-configured or re-established, for ensuring accuracy of subsequent operations duly and building a preferable receiving entity re-establishment mechanism. As for detailed means of re-establishing receiving entity, it is generally implemented according to the out-of-sequence delivery configuration information, wherein, the out-of-sequence delivery configuration information can be either newly read or saved in advance.

The embodiments of present invention involves three implementation schemes: in the first scheme, after the UE reselects the new cell, the receiving entity will be re-established no matter whether value tag of the system information block currently read is identical or not. In the second and the third schemes, under the condition that the UE does not change the cell, the receiving entity will be re-established only when out-of-sequence delivery configuration information changes, wherein, difference between the second and the third schemes is that: means adopted for checking whether out-of-sequence delivery configuration information changes are different. The current value tag is corresponding to the entire system information block, the out-of-sequence delivery configuration information is a message contained in the system information block, and therefore, value tag changes will not always indicate the out-of-sequence delivery configuration information changes. Therefore, the second scheme specially sets a value tag for out-of-sequence delivery configuration information, in order to indicate whether the out-of-sequence delivery configuration information changes. In the third scheme, the UE compares the received out-of-sequence delivery configuration information with the out-of-sequence delivery configuration information saved in the UE, to determine whether the out-of-sequence delivery configuration information changes.

All of the three schemes above have their detailed way for implementing, for example: RLC receiving entity is re-configured or re-established based on the conventional standardized procedures, but corresponding amendments is executed on operating conditions or relevant judgments, therefore, amendment on existing protocols is less. A new re-establishment means in special environment to cancel some unnecessary processing steps and simplify complexity of the procedure.

Different conditions for diversified schemes in accordance with the embodiment of the present invention will be described in more detail hereinafter with the reference to the drawings and embodiments.

### A first embodiment:

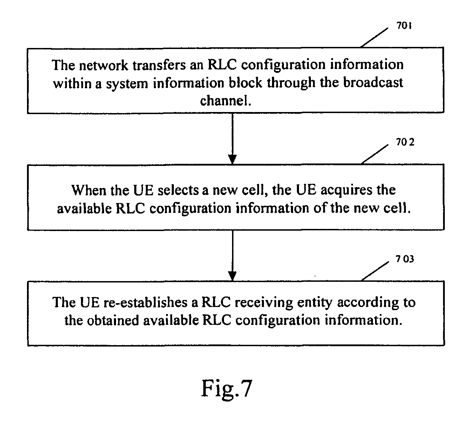

In this preferred embodiment of the present invention, a UE reselected a new cell and the procedure is implemented according to the protocol in the 3GPP TS 25.331. Now referring to Fig.7, the method for receiving MBMS information according to this preferred embodiment includes the following steps:

Step 701: The network transfers RLC configuration information within a system information block through the broadcast channel.

Generally, a UTRAN makes out-of-sequence delivery configuration information in a System Information Block type 5 or 5bis, and transfers it through the broadcast channel.

Step 702: When the UE selects a new cell, the UE acquires the available RLC configuration information of the new cell. The available RLC configuration information refers to the information read from the system information block currently, or the information in the system information block stored in the current UE.

Generally, When the UE selects a new cell, the UE reads a Master Information Block corresponding to the new cell, and reads a system information block and a scheduling block according to scheduling information in the Master Information Block or the scheduling information stored in the Master Information Block.

For the currently received System Information Block type 5 or 5bis, the UE compares a value tag of the system information block read from the scheduling information with the value tag stored in its VALUE_TAG variable for the system information block; if these value tags are different or there is no corresponding system information block stored in the UE, the value tag read from the scheduling information is stored in the VALUE_TAG variable of the UE. The system information block is read and stored, and the RLC configuration information in the system information block currently read is used as the RLC configuration information. If the value tags are identical, the UE makes the RLC configuration information in the system information block stored in itself as the available RLC configuration information.

In this step, the step of the UE comparing a value tag of the system information block read from the scheduling information with the value tag stored in its

VALUE_TAG variable for the system information block may be omitted. Then the procedure is that: when the UE selects a new cell, the UE reads RLC configuration information of the current cell.

That is, if the currently received system information block is a System Information Block type 5 or 5bis, the UE reads value tag from the current scheduling information and stores it into variable VALUE_TAG of the UE, and reads and stores the current system information block. In this embodiment, the RLC configuration information read from the system information block is the available RLC configuration information of the current UE. Step 703: The UE re-establishes an RLC receiving entity according to the obtained available RLC configuration information. In detail, after the UE selected a new cell, if the System Information Block type 5 or 5bis read in advance or stored in the UE includes the out-of-sequence delivery configuration information, the UE reconfigures a RLC UM receiving entity according to the out-of-sequence delivery configuration information, i.e., re-establishing corresponding RLC receiving entity.

The process of re-establishing RLC receiving entity further includes the following steps: ① reset the state variable with the initial value. Wherein, the state variable refers to a VR (UOH), which is used to indicate the largest sequence number of the PDU that current RLC receiving entity has received. Generally, the value of VR (UOH) is the upper limit of the sequence number of the PDUs, the lower limit of sequence number of the received PDU is the VR (UOH) minus the Out-of-Sequence Delivery receiving Window size. ② set configure value with the configure parameters, which is actually setting Out-of-Sequence Delivery receiving Window size, the Out-of-Sequence Delivery receiving Window is set as corresponding parameter values in the system information block read in advance or the system information block stored in the UE. ③ set a Hyper Frame Number with a higher layer configuration value. ④ discard all Unacknowledged Mode Data Protocol Data Units (UMD PDUs) in the RLC receiving entity. ⑤ If the timer Timer_OSD has started, cancel the timer. The implement method for re-establishing RLC receiving entity is the prior art, and no details will be discussed hereinafter.

### A second embodiment:

This preferred embodiment is similar with the first embodiment, the only difference is that: the re-establishing RLC receiving entity further includes following steps: upon the RLC receiving entity being re-established, making the first PDU received by the re-established RLC receiving entity as the first PDU received by the RLC receiving entity; moreover, setting the current VR (UOH) as sequence number of current PDU decreased by one after receiving the first PDU.

### A third embodiment:

Processing steps in this preferred embodiment are similar with those of the first embodiment, the difference is that: because the UE must re-establish RLC receiving entity after reselecting a cell, the preferred embodiment no longer needs to consider processing the value tag, which means that it is unnecessary to check whether the value tag currently read is identical with the value tag saved in the UE, and unnecessary to check whether the UE has saved corresponding value tag. Thus, Step 702 turns into:

Step 702': when a new cell is selected, the UE reads RLC configuration information of current cell.

Generally, after selecting a new cell, the UE needs to read Master Information Block that is corresponding to the cell, and then read system information block and block scheduling according to the schedule message in the Master Information Block or the schedule message saved in the Master Information Block.

If the currently received system information block is System Information Block type 5 or 5bis, then the UE reading value tag from current schedule message and saving it into variable VALUE_TAG of UE, and reading and saving the current system information block. In this embodiment, the RLC configuration information in the read system information block is just the current applicable RLC configuration information.

Correspondingly, in Step 703, if the System Information Block type 5 or 5bis currently read contains out-of-sequence delivery configuration information, then the UE re-establishing corresponding RLC receiving entity according to the out-of-sequence delivery configuration information.

### A fourth embodiment:

This preferred embodiment is similar with the third embodiment, the only difference is that: said re-establishing RLC receiving entity further includes the following steps: upon RLC receiving entity is re-established, the first PDU received by the re-established RLC entity is made as the first PDU received by the RLC entity; moreover, after the first PDU is received, sequence number of current PDU decreased by one is set as the current VR (UOH).

In the above preferred embodiments and this preferred embodiment, after reselecting a new cell, the UE uses the out-of-sequence delivery configuration information read in advance, or the out-of-sequence delivery configuration information stored in the UE to re-establish MCCH RLC entity, which can not only avoid inaccurate RLC SDU resulting from re-establishment of the PDU that includes the new cell MCCH information and the PDU that contains the original cell MCCH information, but also clear the buffer in time.

In the above preferred embodiments and this embodiment, all the out-of-sequence delivery configuration information are placed within System Information Block type 5 or 5bis for transferring, in practical application, the out-of-sequence delivery configuration information can also be placed within other type of system information block for transferring. Besides, once the UE decides to re-establish RLC entity, the process can be implemented within the current modification period, that is: re-establishment is implemented immediately after acquiring the out-of-sequence delivery configuration information of the new cell. The re-establishment can be implemented in the next modification period or in the period instructed by the network.

### A fifth embodiment:

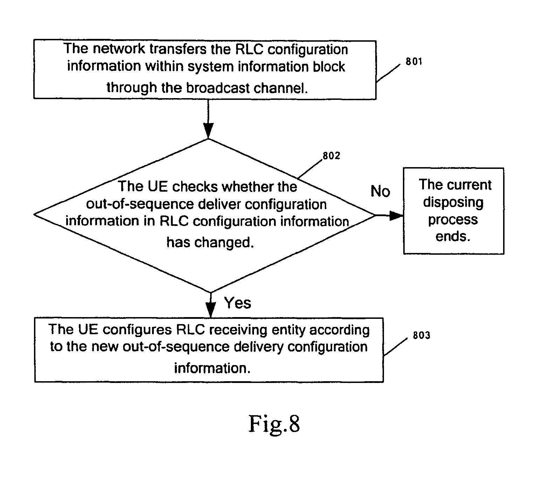

In this preferred embodiment, When the UE does not re-select a new cell. RLC receiving entity re-configuring or re-establishing can be implemented only when the out-of-sequence delivery configuration information changes. Since the value tag in prior art is used for identifying whether some information in the entire system information block has changed, in this case, it is difficult to exactly know whether the out-of-sequence delivery configuration information has changed, therefore, this preferred embodiment configuring an exclusive value tag for the out-of-sequence delivery configuration information to especially indicate whether content of the out-of-sequence delivery configuration information has changed, the parameter can be called as out-of-sequence message value tag. Once content of the out-of-sequence delivery configuration information changes, the out-of-sequence message value tag that is corresponding to out-of-sequence delivery configuration information will be accordingly modified into different values. As shown in Fig.8, the method for receiving MBMS information in this preferred embodiment includes the following steps:

Step 801: The network transfers the RLC configuration information within the system information block through the broadcast channel.

Generally, the UTRAN transfers the out-of-sequence delivery configuration information within the System Information Block type 5 or 5bis through the broadcast channel. When the content of the System Information Block type 5 or 5bis changes, the value tag corresponding to the system information block is correspondingly modified; when content of the out-of-sequence delivery configuration information changes, the configured out-of-sequence message value tag is correspondingly modified.

Step 802~803: the UE checks whether the out-of-sequence delivery configuration information in RLC configuration information has changed, if the out-of-sequence delivery configuration information in RLC configuration information has changed, then RLC receiving entity is configured according to the new out-of-sequence delivery configuration information; otherwise, the current disposing process ends.

In this preferred embodiment, the step of checking whether the out-of-sequence delivery configuration information has changed includes: the UE checks whether the out-of-sequence message value tag has changed.

As for the currently received System Information Block type 5 or 5bis, the UE will compare value tag of the system information block read from the scheduling information with the value tag stored in its VALUE_TAG variable for the system information block; if these value tags are different or there is no corresponding system information block stored in the UE, then the UE stores the value tag that is read from the scheduling information into variables VALUE_TAG of the UE, reads and stores the system information block, and then makes the information in the system information block currently read as available RLC configuration information; otherwise if the value tags are identical, then the UE can make the information in the system information block it stored as available RLC configuration information.

As for out-of-sequence delivery configuration information in the system information block, the UE compares out-of-sequence message value tag corresponding to the out-of-sequence delivery configuration information and read from the system information with the out-of-sequence message value tag stored in the UE for the out-of-sequence delivery configuration information ; if these out-of-sequence message value tags are different, then the UE stores the out-of-sequence message value tag that is read in advance into its corresponding variables, and configures RLC receiving entity according to parameters of the out-of-sequence delivery configuration information that is read in advance; otherwise if these out-of-sequence message value tags are identical, then the UE ignores all received out-of sequence delivery configuration information.

The above checking processes of value tag corresponding to the system information block mainly aims to accord with regulations of standard protocols in prior art, in practical application, the operation is unnecessary. Of course, the UE can first check whether content of the system information block has changed, if the content of the system information block has changed, then the UE further checks whether content of the out-of-sequence delivery configuration information has changed, otherwise, the UE can directly end the processing steps.

The step of configuring RLC receiving entity in Step 803 of this embodiment refers to re-configuring RLC receiving entity and updating configuration parameters according to the updated out-of-sequence delivery configuration information parameter, for instance, changing size of the parameter Out-of-Sequence Delivery Storage Window. Correspondingly, in the RLC receiving entity, if value of the newly configured parameter of the Out-of-Sequence Delivery Storage Window is smaller than that of the original Out-of-Sequence Delivery Storage Window parameter, then the PDU out of the window of the RLC receiving entity buffer is discarded. Wherein, the PDU out of the window refers to the PDU whose sequence number (SN) is outside the scope of: VR (UOH) minus size of the Out-of-Sequence Delivery Storage Window <SN< VR (UOH).

In this preferred embodiment, value of the configured out-of-sequence message value tag can be any successive integer, e.g. 1 to 8, and initial value can be a random number, each time when the out-of-sequence delivery configuration information changes, value of the out-of-sequence message value tag increases by 1 and then gets module.

### A sixth embodiment:

Processing steps in this preferred embodiment are similar to those of the fifth embodiment, the difference is that: in this preferred embodiment, the step of configuring RLC receiving entity in Step 803 refers to re-establishing RLC receiving entity. Wherein, the step of re-establishing RLC receiving entity process further includes following steps: ① reset the state variable with the initial value. Wherein, the state variable refers to VR (UOH), which is used to indicate the largest sequence number of the PDU that current RLC entity has received. Generally, value of VR (UOH) is the upper limit of sequence number of the PDU, while VR (UOH) minus size of the Out-of-Sequence Delivery Storage Window equals to lower limit of sequence number of the received PDU. ② set configure value with the configure parameters, which is actually setting size of the Out-of-Sequence Delivery Storage Window, and set current size of the Out-of-Sequence Delivery Storage Window with corresponding parameter values in the system information block read in advance or the stored system information block. ③ set Hyper Frame Number with higher layer configuration value. ④ discard all UMD PDUs in the RLC entity. ⑤ If the timer Timer_OSD has started, then the timer is stopped.

### A seventh embodiment:

Processing steps in this preferred embodiment are similar with those of the sixth embodiment, the only difference is that: the step of re-establishing RLC receiving entity further includes the following steps: after RLC receiving entity is re-established, the first PDU received by the re-established RLC entity is made as the first PDU received by the RLC entity; moreover, after the first PDU is received, the current VR (UOH) is set as sequence number of current PDU decreased by one.

In the fifth embodiment and the sixth embodiment and the seventh embodiment, only when content of the out-of-sequence delivery configuration information changes, the out-of-sequence delivery configuration information is processed, and RLC entity is re-configured or re-established according to the out-of-sequence delivery configuration information read in advance, which can avoid the case that when content change of other information in the system information block that contains out-of-sequence delivery configuration information results in re-establishing or re-configuring of RLC receiving entity. Wherein, as for whether re-configuring RLC receiving entity or re-establishing RLC receiving entity can be determined through UTRAN sending corresponding identifier to the UE for instructing the UE to re-configure or re-establish RLC receiving entity.

In the fifth embodiment and the sixth embodiment and the seventh embodiment, all the out-of-sequence delivery configuration information transferred within the System Information Block type 5 or 5bis, in practical application, the out-of-sequence delivery configuration information can also transferred within other types of system information block. Besides, while the UE is determining re-configuring or re-establishing RLC entity, the re-configuring or re-establishing process can be implemented in the modification period, i.e. upon getting the out-of-sequence delivery configuration information, the UE implements the re-configuring or re-establishing process immediately; or postpones the re-configuring or re-establishing operation to next modification period; or decides the implementing time according to instruction of the network.

### An eighth embodiment:

In this preferred embodiment, for the UE that has not reselected cell, RLC receiving entity re-configuring or re-establishing can be implemented only when the out-of-sequence delivery configuration information changes. The embodiment directly compares parameter values of the out-of-sequence delivery configuration information that the UE currently read with that of the out-of-sequence delivery configuration information stored in the UE to determine whether the out-of-sequence delivery configuration information has changed. Wherein, the changes of the out-of sequence delivery configuration information can be changes of one of the parameters or several of the parameters.

Actually, Processing steps in this preferred embodiment are similar to those of the fifth embodiment; the difference is that: the checking process in Step 802. In this embodiment, the step of checking whether the out-of-sequence delivery configuration information has changed includes: the UE checks whether all parameters of the out-of-sequence delivery configuration information that is read is same with those of the out-of-sequence delivery configuration information stored in the UE, if they are different, then configures RLC receiving entity according to the out-of-sequence delivery configuration information read in advance; otherwise, the UE ends the current disposing process.

Wherein, the UE reads system information block from the scheduling information first, and then reads out-of-sequence delivery configuration information from the system information of the system information block.

In this preferred embodiment, the step of configuring RLC receiving entity in Step 803 refers to re-configuring RLC receiving entity according to the updated out-of-sequence delivery configuration information parameter, for instance, changing size of the parameter Out-of-Sequence Delivery Storage Window. Correspondingly, in the RLC receiving entity, if the value of the newly configured parameter of the Out-of-Sequence Delivery Storage Window is smaller than that of the original Out-of Sequence Delivery Storage Window parameter, then the PDU out of the window of the RLC receiving entity buffer is discarded. Wherein, the PDU beyond the window refers to: the PDU whose sequence number (SN) is outside the scope of VR (UOH)-size of the Out-of-Sequence Delivery Storage Window <SN< VR (UOH).

### A ninth embodiment:

Processing steps in this preferred embodiment are similar with those of the eighth embodiment, the difference is that: the step of configuring RLC receiving entity in this preferred embodiment refers to re-establishing RLC receiving entity. Wherein, the step of re-establishing RLC receiving entity process further includes the following steps: ① reset the state variable with the initial value. Wherein, the state variable refers to VR (UOH), which is used to indicate the largest sequence number of the PDU that current RLC entity has received. Generally, value of VR (UOH) is the upper limit of sequence number of the PDU, while VR (UOH) minus size of the Out-of-Sequence Delivery Storage Window equals to lower limit of sequence number of the received PDU. ② set configure value with the configure parameters, which is actually setting size of the Out-of-Sequence Delivery Storage Window, and setting current size of the Out-of-Sequence Delivery Storage Window with corresponding parameter values in the system information block read in advance or the stored system information block. ③ set Hyper Frame Number with higher layer configuration value. ④ discard all UMD PDUs in the RLC entity. ⑤ If the timer Timer_OSD has started, then the timer is stopped.

### A tenth embodiment:

Processing steps in this preferred embodiment are similar to those of the ninth embodiment, the only difference is that: the step of re-establishing RLC receiving entity further includes the following steps: upon RLC receiving entity is re-established, the first PDU received by the re-established RLC entity is made as the first PDU received by the RLC entity; moreover, upon the first PDU is received, the current VR (UOH) is set as sequence number of current PDU decreased by one.

In the eighth embodiment and the ninth embodiment and the tenth embodiment, only when content of the out-of-sequence delivery configuration information read in advance changes ,the out-of-sequence delivery configuration information is processed, and the RLC entity is re-configured or re-established according to the configuration information, which can avoid the case that when content change of other information in the system information block that contains out-of-sequence delivery configuration information results in re-establishing or re-configuring of RLC receiving entity. Wherein, as for whether re-configuring RLC receiving entity or re-establishing RLC receiving entity can be determined by UTRAN sending corresponding identifier to the UE and instructing the UE to re-configure or re-establish RLC receiving entity.

In the eighth embodiment and the ninth embodiment and the tenth embodiment, all the out-of-sequence delivery configuration information transferred within the System Information Block type 5 or 5bis, in practical application, the out-of-sequence delivery configuration information can also transferred within other types of system information block. Besides, while the UE is determining re-configuring or re-establishing RLC entity, the re-configuring or re-establishing process can be implemented in the modification period, i.e. upon getting the out-of-sequence delivery configuration information, the UE implements the re-configuring or re-establishing process immediately; or postpones the re-configuring or re-establishing operation to next modification period; or decides the implementing time according to instruction of the network.

The premises of embodiments from the fifth embodiment to the tenth embodiment are that: the RLC configuration information contains out-of-sequence delivery configuration information, if without the premise, then, the following checking process should be made after the UE receives RLC configuration information: the UE determines whether the RLC configuration information contains out-of-sequence delivery configuration information, if the RLC configuration information contains out-of-sequence delivery configuration information, then continues to check whether the out-of-sequence delivery configuration information has changed, otherwise, directly ends the process step. Of course, there is one special situation: once the UE receives the out-of-sequence delivery configuration information, then the RLC receiving entity is re-configured or re-established no matter whether the out-of-sequence delivery configuration information has changed or not, in this case, as long as the UE verifies that the RLC configuration information contains out-of-sequence delivery configuration information, the re-configuring or re-establishing operation will be implemented instead of continuing to check whether the out-of-sequence delivery configuration information has changed. The detailed means to implement RLC receiving entity re-configuring or re-establishing operations is just the same with that in the embodiments from the fifth embodiment to the tenth embodiment.

The RLC receiving entity in all preferred embodiments above can be MCCH RLC UM entity, anyhow, the forgoing discussion discloses and describes merely preferred embodiments of the present invention, and is not used to limit protection scope of the present invention.

## Claims

1. A method for receiving Multimedia Broadcast/Multicast Service, MBMS, control information, comprising:
selecting, by a User Equipment, UE, a new cell;
checking, by the UE, whether content of a system information block transferred from a network side in a broad cast channel is changed;
if the content of the system information block transferred from the network side is not changed, obtaining Radio Link Control Layer RLC configuration information of a system information block stored in the UE as the RLC configuration information which is available to the new cell;
if the content of the system information block transferred from the network side is changed, reading and storing the system information block transferred from the network side, and making the RLC configuration information in the system information block transferred from the network side as the RLC configuration information which is available to the new cell; and
re-establishing, by the UE, an RLC receiving entity according to the RLC configuration information which is available to the new cell.

2. The method of claim 1, before checking whether the content of the system information block transferred from the network side is changed, the method further comprising:
determining if the system information block transferred from the network side contains RLC configuration information.

3. The method of claim 1 or 2, wherein the checking whether the content of the system information block transferred from the network side is changed comprises:
checking whether a value tag corresponding to the system information block transferred from the network side is the same as a value tag stored by the UE itself, when the value tag is the same, determining that the content of the system information block transferred from the network side is not changed;
otherwise, determining that the content of the system information block transferred from the network side is changed.

4. The method of any one of claims 1 to 3, wherein the RLC configuration information which is available to the new cell comprises out-of-sequence delivery configuration information.

5. The method of claim 4, wherein the re-establishing the RLC receiving entity according to the RLC configuration information which is available to the new cell comprises:
when obtaining the RLC configuration information which is available to the new cell, the UE re-establishing the RLC receiving entity immediately or in a modification period next to the modification perioid in which the UE obtains the RLC configuration information which is available to the new cell; or the UE determining the time to re-establish the RLC receiving entity according to an instruction sent from the network side.

6. The method of claim 5, wherein the procedure of re-establishing the RLC receiving entity comprises: checking whether a timer Timer_OSD starts, if the timer starts, stopping the timer; otherwise, leaving the timer alone.

7. A method for receiving Multimedia Broadcast Multicast Service, MBMS control information, **characterized by** comprising:
receiving, by a User Equipment, UE, RadioLink Control Layer RLC configuration information included in a system information block transferred from a network side in a broadcast channel;
configuring, by the UE, an RLC receiving entity according to out-of-sequence delivery configuration information when the UE does not select a new cell, and the out-of-sequence delivery configuration information within the RLC configuration information is changed.

8. The method of claim 7, wherein when the RLC configuration information comprises the out-of-sequence delivery configuration information, the procedure of the UE configuring the RLC receiving entity further comprises:
when the out-of-sequence delivery configuration information changes, configuring the RLC receiving entity according to the out-of-sequence delivery configuration information newly received.

9. The method of claim 8, further comprising: setting an out-of-sequence message value tag corresponding to the out-of-sequence delivery configuration information;
wherein in the procedure of the UE configuring an RLC receiving entity, when the out-of-sequence message value tag currently read is the same as an out-of-sequence message value tag in the corresponding out-of-sequence delivery configuration information stored in the UE, the out-of-sequence delivery configuration information is not changed; when it is not the same the out-of-sequence delivery configuration information is changed.

10. The method of claim 8, wherein in the procedure of the UE configuring an RLC receiving entity, when the out-of-sequence delivery configuration information currently read is the same as parameter values of out-of-sequence delivery configuration information stored in the UE, the out-of-sequence delivery configuration information is not changed; otherwise the out-of-sequence delivery configuration information is changed.

11. The method of claim 8, when the out-of-sequence delivery configuration information changes, the procedure of the UE configuring an RLC receiving entity further comprises: storing the out-of-sequence message value tag currently read.

12. The method of any one of claims 7 to 11, wherein the procedure of configuring the RLC receiving entity comprises: upon getting the out-of-sequence delivery configuration information, the UE immediately resetting a configuration parameter of the RLC receiving entity; or, resetting the configuration parameter of the RLC receiving entity in a modification period next to the one in which the UE obtaining the out-of-sequence delivery configuration information; or, the UE determining a time to reset the configuration parameter of the RLC receiving entity according to instruction sent from the network.

13. The method of claim 12, wherein the configuration parameter of the RLC receiving entity is the size of an Out-of-Sequence Delivery Storage Window; upon resetting the configuration parameter of the RLC receiving entity, further comprising: checking whether the size of the updated Out-of-Sequence Delivery Storage Window is smaller than that of before updating, if smaller, discarding a Protocol Data Unit, PDU, whose sequence number is out of the Out-of-Sequence Delivery Storage Window in an RLC receiving entity buffer.

14. The method of any one of claims 7 to 11, wherein the procedure of configuring RLC receiving entity comprises: re-establishing the RLC receiving entity according to the out-of-sequence delivery configuration information received.

15. The method of claim 14, wherein the procedure of re-establishing the RLC receiving entity comprises:
upon getting the out-of-sequence delivery configuration information, the UE immediately starting re-establishing the RLC receiving entity; or, re-establishing the RLC receiving entity in the modification period next to the one in which the UE obtaining the out-of-sequence delivery configuration information; or, the UE determining the time to re-establish the RLC receiving entity according to the instruction sent from the network.

16. The method of claim 14, wherein the procedure of re-establishing the RLC receiving entity comprises:
resetting a state variable with a initial value; setting the configuration parameter with a configuration value; setting Hyper Frame Number with a higher layer configuration value; discarding all Unacknowledged Mode Data Protocol Data Units , UMD PDUs, in the RLC entity.

17. The method of any one of claims 7 to 11, wherein the system information block is System Information Block type 5, or 5bis.

18. A system for receiving Multimedia Broadcast/Multicast Service, MBMS, control information comprising a network side and a User Equipment, UE,
the network side having means configured to transfer a system information block in a broadcast channel, the system information block includes Radio Link Control Layer, RLC, configuration information; and
the UE having means configured to, if the UE selects a new cell, obtain the RLC configuration information which is available to the new cell from a system information block stored in the UE if the content of a system information block transferred from a network side is not changed; read and store the system information block transferred from the network side, and make the RLC configuration information in the system information block transferred from the network side as the RLC configuration information which is available to the new cell, if the content of the system information block transferred from the network side is changed; and re-establish an RLC receiving entity according to the RLC configuration information which is available to the new cell; or configured to receive the RLC configuration information included in the system information block transferred from the network side if the UE does not select a new cell and out-of-sequence delivery configuration information within the RLC configuration information is changed, and configure the RLC receiving entity according to the received out-of-sequence delivery configuration information.

19. A User Equipment, UE, for receiving Multimedia Broadcast/Multicast Service, MBMS, control information comprising:
means for receiving RLC configuration information;
means for obtaining the RLC configuration information which is available to a new cell from the received RLC configuration information;
means for configuring an RLC receiving entity; and
wherein if the UE does not select a new cell and out-of-sequence delivery configuration information within the RLC configuration information is changed, configuring the RLC receiving entity according to the out-of-sequence delivery configuration information.

20. A User Equipment, UE, for receiving Multimedia Broadcast/Multicast Service, MBMS, control information comprising:
means for selecting a new cell;
means for checking whether content of a system information block transferred from a network side is changed when selecting the new cell;
means for obtaining Radio Link Control Layer RLC configuration information of the system information block stored in the UE as RLC configuration information which is available to the new cell, if the content of the system information block transferred from the network side is not changed; and
means for reading and storing the system information block transferred from the network side, and making RLC configuration information in the system information block transferred from the network side as the RLC configuration information which is available to the new cell, if the content of the system information block transferred from the network side is changed;
means for re-establishing an RLC receiving entity according to the RLC configuration information which is available to the new cell.

## Patentansprüche

1. Verfahren zum Empfangen von Steuerinformationen des Multimedia Broadcast/Multicast Service MBMS, mit den folgenden Schritten:
ein Benutzergerät UE wählt eine neue Zelle aus;
das UE prüft, ob Inhalt eines von einer Netzseite in einem Broadcast-Kanal transferierten Systeminformationsblocks geändert ist;
wenn der Inhalt des von der Netzseite transferierten Systeminformationsblocks nicht geändert ist, werden Konfigurationsinformationen der Radio Link Control Layer RLC eines in dem UE gespeicherten Systeminformationsblocks als die RLC-Konfigurationsinformationen erhalten, die der neuen Zelle verfügbar sind;
wenn der Inhalt des von der Netzseite transferierten Systeminformationsblocks geändert ist, wird der von der Netzseite transferierte Systeminformationsblock gelesen und gespeichert und die RLC-Konfigurationsinformationen in dem von der Netzseite transferierten Systeminformationsblock werden zu den RLC-Konfigurationsinformationen gemacht, die der neuen Zelle verfügbar sind; und
das UE stellt eine RLC-Empfangsentität gemäß den RLC-Konfigurationsinformationen, die der neuen Zelle verfügbar sind, wieder her.

2. Verfahren nach Anspruch 1, wobei das Verfahren vor dem Prüfen, ob der Inhalt des von der Netzseite transferierten Systeminformationsblocks geändert ist, ferner Folgendes umfasst:
Bestimmen, ob der von der Netzseite transferierte Systeminformationsblock RLC-Konfigurationsinformationen enthält.

3. Verfahren nach Anspruch 1 oder 2, wobei das Prüfen, ob der Inhalt des von der Netzseite transferierten Systeminformationsblocks geändert ist, Folgendes umfasst:
Prüfen, ob ein Wert-Tag, das dem von der Netzseite transferierten Systeminformationsblock entspricht, dasselbe wie ein durch das UE selbst gespeichertes Wert-Tag ist,
wenn das Wert-Tag dasselbe ist, Bestimmen, dass der Inhalt des von der Netzseite transferierten Systeminformationsblocks nicht geändert ist;
andernfalls Bestimmen, dass der Inhalt des von der Netzseite transferierten Systeminformationsblocks geändert ist.

4. Verfahren nach einem der Ansprüche 1 bis 3, wobei die RLC-Konfigurationsinformationen, die der neuen Zelle verfügbar sind, Außersequenz-Ablieferungskonfigurationsinformationen umfassen.

5. Verfahren nach Anspruch 4, wobei das Wiederherstellen der RLC-Empfangsentität gemäß den RLC-Konfigurationsinformationen, die der neuen Zelle verfügbar sind, Folgendes umfasst:
beim Erhalten der RLC-Konfigurationsinformationen, die der neuen Zelle verfügbar sind, stellt das UE die RLC-Empfangsentität unmittelbar wieder her, oder in einer Modifikationsperiode neben der Modifikationsperiode, in der das UE die RLC-Konfigurationsinformationen erhält, die der neuen Zelle verfügbar sind; oder das UE bestimmt die Zeit zum Wiederherstellen der RLC-Empfangsentität gemäß einer von der Netzseite gesendeten Anweisung.

6. Verfahren nach Anspruch 5, wobei die Prozedur zum Wiederherstellen der RLC-Empfangsentität Folgendes umfasst: Prüfen, ob ein Timer_OSD startet; wenn der Timer startet, Stoppen des Timers; andernfalls Inruhelassen des Timers.

7. Verfahren zum Empfangen von Steuerinformationen des Multimedia Broadcast/Multicast Service MBMS, **gekennzeichnet durch** die folgenden Schritte:
ein Benutzergerät UE empfängt Konfigurationsinformationen der Radio Link Control Layer RLC, die in einem von einer Netzseite in einem Boadcast-Kanal transferierten Systeminformationsblock enthalten sind;
das UE konfiguriert eine RLC-Empfangsentität gemäß Außersequenz-Ablieferungskonfigurationsinformationen, wenn das UE keine neue Zelle auswählt und die Außersequenz-Ablieferungskonfigurationsinformationen in den RLC-Konfigurationsinformationen geändert sind.

8. Verfahren nach Anspruch 7, wobei, wenn die RLC-Konfigurationsinformationen die Außersequenz-Ablieferungskonfigurationsinformationen umfassen, die Prozedur des Konfigurierens der RLC-Empfangsentität durch das UE ferner Folgendes umfasst:
wenn sich die Außersequenz-Ablieferungskonfigurationsinformationen ändern, Konfigurieren der RLC-Empfangsentität gemäß den neu empfangenen Außersequenz-Ablieferungskonfigurationsinformationen.

9. Verfahren nach Anspruch 8, ferner mit dem folgenden Schritt: Setzen eines Außersequenz-Nachrichtenwert-Tag, das den Außersequenz-Ablieferungskonfigurationsinformationen entspricht;
wobei in der Prozedur des Konfigurierens einer RLC-Empfangsentität durch das UE, wenn das gerade gelesene Außersequenz-Nachrichtenwert-Tag dasselbe wie ein Außersequenz-Nachrichtenwert-Tag in den in dem UE gespeicherten entsprechenden Außersequenz-Ablieferungskonfigurationsinformationen ist, die Außersequenz-Ablieferungskonfigurationsinformationen nicht geändert werden; und wenn es nicht dasselbe ist, die Außersequenz-Ablieferungskonfigurationsinformationen geändert werden.

10. Verfahren nach Anspruch 8, wobei in der Prozedur des Konfigurierens einer RLC-Empfangsentität durch das UE, wenn die gerade gelesenen Außersequenz-Ablieferungskonfigurationsinformationen dieselben wie Parameterwerte von in dem UE gespeicherten Außersequenz-Ablieferungskonfigurationsinformationen sind, die Außersequenz-Ablieferungskonfigurationsinformationen nicht geändert werden; und andernfalls die Außersequenz-Ablieferungskonfigurationsinformationen geändert werden.

11. Verfahren nach Anspruch 8, wobei, wenn sich die Außersequenz-Ablieferungskonfigurationsinformationen ändern, die Prozedur des Konfigurierens einer RLC-Empfangsentität durch das UE ferner Folgendes umfasst: Speichern des gerade gelesenen Außersequenz-Nachrichtenwert-Tag.

12. Verfahren nach einem der Ansprüche 7 bis 11, wobei die Prozedur des Konfigurierens der RLC-Empfangsentität Folgendes umfasst: beim Erhalten der Außersequenz-Ablieferungskonfigurationsinformationen setzt das UE einen Konfigurationsparameter der RLC-Empfangsentität unmittelbar zurück; oder der Konfigurationsparameter der RLC-Empfangsentität wird in einer Modifikationsperiode neben der, in der das UE die Außersequenz-Ablieferungskonfigurationsinformationen erhält, zurückgesetzt; oder das UE bestimmt eine Zeit zum Rücksetzen des Konfigurationsparameters der RLC-Empfangsentität gemäß einer von dem Netz gesendeten Anweisung.

13. Verfahren nach Anspruch 12, wobei der Konfigurationsparameter der RLC-Empfangsentität die Größe eines Außersequenz-Ablieferungsspeicherfensters ist; wobei das Verfahren beim Rücksetzen des Konfigurationsparameters der RLC-Empfangsentität ferner Folgendes umfasst: Prüfen, ob die Größe des aktualisierten Außersequenz-Ablieferungsspeicherfensters kleiner als die vor dem Aktualisieren ist; wenn sie kleiner ist, Verwerfen einer Protocol Data Unit PDU, deren Sequenznummer außerhalb des Außersequenz-Ablieferungsspeicherfensters in einem RLC-Empfangsentitätspuffer liegt.

14. Verfahren nach einem der Ansprüche 7 bis 11, wobei die Prozedur des Konfigurierens einer RLC-Empfangsentität Folgendes umfasst: Wiederherstellen der RLC-Empfangsentität gemäß den empfangenen Außersequenz-Ablieferungskonfigurationsinformationen.

15. Verfahren nach Anspruch 14, wobei die Prozedur zum Wiederherstellen der RLC-Empfangsentität Folgendes umfasst:
beim Erhalten der Außersequenz-Ablieferungskonfigurationsinformationen startet das UE das Wiederherstellen der RLC-Empfangsentität unmittelbar; oder die RLC-Empfangsentität wird in der Modifikationsperiode neben der, in der das UE die Außersequenz-Ablieferungskonfigurationsinformationen erhält, wiederhergestellt; oder das UE bestimmt die Zeit zum Wiederherstellen der RLC-Empfangsentität gemäß der von dem Netz gesendeten Anweisung.

16. Verfahren nach Anspruch 14, wobei die Prozedur zum Wiederherstellen der RLC-Empfangsentität Folgendes umfasst:
Rücksetzen einer Zustandsvariablen mit einem Anfangswert; Setzen des Konfigurationsparameters mit einem Konfigurationswert; Setzen der Hyper Frame Number mit einem höheren Schicht-Konfigurationswert; Verwerfen aller Unacknowledged Mode Data Protocol Data Units UMD PDU in der RLC-Entität.

17. Verfahren nach einem der Ansprüche 7 bis 11, wobei der Systeminformationsblock der System Information Block des Typs 5 oder 5bis ist.

18. System zum Empfangen von Steuerinformationen des Multimedia Broadcast/Multicast Service MBMS, das eine Netzseite und ein Benutzergerät UE umfasst, wobei die Netzseite Mittel aufweist, die dafür ausgelegt sind, einen Systeminformationsblock in einem Broadcast-Kanal zu transferieren, wobei der Systeminformationsblock Konfigurationsinformationen der Radio Link Control Layer RLC umfasst; und
das UE Mittel aufweist, die dafür ausgelegt sind, wenn das UE eine neue Zelle auswählt, die RLC-Konfigurationsinformationen, die der neuen Zelle verfügbar sind, aus einem in dem UE gespeicherten Systeminformationsblock zu erhalten, wenn der Inhalt eines von einer Netzseite transferierten Systeminformationsblocks nicht geändert ist; den von der Netzseite transferierten Systeminformationsblock zu lesen und zu speichern und die RLC-Konfigurationsinformationen in dem von der Netzseite transferierten Systeminformationsblock zu den RLC-Konfigurationsinformationen zu machen, die der neuen Zelle verfügbar sind, wenn der Inhalt des von der Netzseite transferierten Systeminformationsblocks geändert ist; und eine RLC-Empfangsentität gemäß den RLC-Konfigurationsinformationen, die der neuen Zelle verfügbar sind, wiederherzustellen; oder dafür ausgelegt sind, die RLC-Konfigurationsinformationen, die in dem von der Netzseite transferierten Systeminformationsblock enthalten sind, zu empfangen, wenn das UE keine neue Zelle auswählt und Außersequenz-Ablieferungskonfigurationsinformationen in den RLC-Konfigurationsinformationen geändert sind, und die RLC-Empfangsentität gemäß den empfangenen Außersequenz-Ablieferungskonfigurationsinformationen zu konfigurieren.

19. Benutzergerät UE zum Empfangen von Steuerinformationen des Multimedia Broadcast/Multicast Service MBMS, umfassend:
Mittel zum Empfangen von RLC-Konfigurationsinformationen;
Mittel zum Erhalten der RLC-Konfigurationsinformationen, die einer neuen Zelle verfügbar sind, aus den empfangenen RLC-Konfigurationsinformationen;
Mittel zum Konfigurieren einer RLC-Empfangsentität; und
wobei, wenn das UE keine neue Zelle auswählt und Außersequenz-Ablieferungskonfigurationsinformationen in den RLC-Konfigurationsinformationen geändert sind, die RLC-Empfangsentität gemäß den Außersequenz-Ablieferungskonfigurationsinformationen konfiguriert wird.

20. Benutzergerät UE zum Empfangen von Steuerinformationen des Multimedia Broadcast/Multicast Service MBMS, umfassend:
Mittel zum Auswählen einer neuen Zelle;
Mittel zum Prüfen, ob Inhalt eines von einer Netzseite transferierten Systeminformationsblocks geändert ist, wenn die neue Zelle ausgewählt wird;
Mittel zum Erhalten von Konfigurationsinformationen der Radio Link Control Layer RLC des in dem UE gespeicherten Systeminformationsblocks als RLC-Konfigurationsinformationen, die der neuen Zelle verfügbar sind, wenn der Inhalt des von der Netzseite transferierten Systeminformationsblocks nicht geändert ist; und
Mittel zum Lesen und Speichern des von der Netzseite transferierten Systeminformationsblocks und Machen der RLC-Konfigurationsinformationen in dem von der Netzseite transferierten Systeminformationsblock zu den RLC-Konfigurationsinformationen, die der neuen Zelle verfügbar sind, wenn der Inhalt des von der Netzseite transferierten Systeminformationsblocks geändert ist;
Mittel zum Wiederherstellen einer RLC-Empfangsentität gemäß den RLC-Konfigurationsinformationen, die der neuen Zelle verfügbar sind.

## Revendications

1. Procédé de réception d'informations de commande de Service de Diffusion/Multidiffusion Multimédia, MBMS, comprenant :
la sélection, par un Equipement Utilisateur, UE, d'une nouvelle cellule ;
la vérification, par l'UE, si le contenu d'un bloc d'informations système transféré depuis un côté réseau dans un canal de diffusion a changé ou non ;
si le contenu du bloc d'informations système transféré depuis le côté réseau n'a pas changé, l'obtention d'informations de configuration de Couche de Commande de Liaison Radio, RLC, d'un bloc d'informations système mémorisé dans l'UE comme informations de configuration RLC à la disposition de la nouvelle cellule ;
si le contenu du bloc d'informations système transféré depuis le côté réseau a changé, la lecture et la mémorisation du bloc d'informations système transféré depuis le côté réseau, et l'établissement des informations de configuration RLC dans le bloc d'informations système transféré depuis le côté réseau comme informations de configuration RLC à la disposition de la nouvelle cellule ; et
le rétablissement, par l'UE, d'une entité de réception RLC en fonction des informations de configuration RLC à la disposition de la nouvelle cellule.

2. Procédé selon la revendication 1, comprenant en outre, avant la vérification si le contenu du bloc d'informations système transféré depuis le côté réseau a changé ou non :
la détermination que le bloc d'informations système transféré depuis le côté réseau contient ou non des informations de configuration RLC.

3. Procédé selon la revendication 1 ou 2, dans lequel la vérification si le contenu du bloc d'informations système transféré depuis le côté réseau a changé ou non comprend :
la vérification si une balise de valeur correspondant au bloc d'informations système transféré depuis le côté réseau est identique ou non à une balise de valeur mémorisée par l'UE lui-même,
quand la balise de valeur est identique, la détermination que le contenu du bloc d'informations système transféré depuis le côté réseau n'a pas changé ;
autrement, la détermination que le contenu du bloc d'informations système transféré depuis le côté réseau a changé.

4. Procédé selon l'une quelconque des revendications 1 à 3, dans lequel les informations de configuration RLC à la disposition de la nouvelle cellule comprennent des informations de configuration de délivrance hors séquence.

5. Procédé selon la revendication 4, dans lequel le rétablissement de l'entité de réception RLC en fonction des informations de configuration RLC à la disposition de la nouvelle cellule comprend :
à l'obtention des informations de configuration RLC à la disposition de la nouvelle cellule, le rétablissement par l'UE de l'entité de réception RLC immédiatement ou lors d'une période de modification suivant la période de modification durant laquelle l'UE obtient les informations de configuration RLC à la disposition de la nouvelle cellule ; ou la détermination par l'UE du temps de rétablissement de l'entité de réception RLC en fonction d'une instruction envoyée depuis le côté réseau.

6. Procédé selon la revendication 5, dans lequel la procédure de rétablissement de l'entité de réception RLC comprend : la vérification si une temporisation Timer_OSD commence ou non, si la temporisation commence, l'arrêt de la temporisation ; autrement, le non-arrêt de la temporisation.

7. Procédé de réception d'informations de commande de Service de Diffusion/Multidiffusion Multimédia, MBMS, **caractérisé en ce qu'**il comprend :
la réception, par un Equipement Utilisateur, UE, d'informations de configuration de Couche de Commande de Liaison Radio, RLC, incluses dans un bloc d'informations système transféré depuis un côté réseau dans un canal de diffusion ;
la configuration, par l'UE, d'une entité de réception RLC en fonction d'informations de configuration de délivrance hors séquence quand l'UE ne sélectionne pas une nouvelle cellule et les informations de configuration de délivrance hors séquence dans les informations de configuration RLC ont changé.

8. Procédé selon la revendication 7, dans lequel quand les informations de configuration RLC comprennent les informations de configuration de délivrance hors séquence, la procédure de configuration par l'UE de l'entité de réception RLC comprend en outre :
quand les informations de configuration de délivrance hors séquence changent, la configuration de l'entité de réception RLC en fonction des informations de configuration de délivrance hors séquence nouvellement reçues.

9. Procédé selon la revendication 8, comprenant en outre : l'établissement d'une balise de valeur de message hors séquence correspondant aux informations de configuration de délivrance hors séquence ;
dans lequel dans la procédure de configuration par l'UE d'une entité de réception RLC, quand la balise de valeur de message hors séquence en cours de lecture est identique à une balise de valeur de message hors séquence dans les informations de configuration de délivrance hors séquence correspondantes mémorisées dans l'UE, le non-changement des informations de configuration de délivrance hors séquence ; quand elle n'est pas identique, le changement des informations de configuration de délivrance hors séquence.

10. Procédé selon la revendication 8, dans lequel dans la procédure de configuration par l'UE d'une entité de réception RLC, quand les informations de configuration de délivrance hors séquence en cours de lecture sont identiques à des valeurs paramétriques d'informations de configuration de délivrance hors séquence mémorisées dans l'UE, les informations de configuration de délivrance hors séquence ne sont pas changées ; quand elles ne sont pas identiques, les informations de configuration de délivrance hors séquence sont changées.

11. Procédé selon la revendication 8, quand les informations de configuration de délivrance hors séquence changent, la procédure de configuration par l'UE d'une entité de réception RLC comprend en outre : la mémorisation de la balise de valeur de message hors séquence en cours de lecture.

12. Procédé selon l'une quelconque des revendications 7 à 11, dans lequel la procédure de configuration de l'entité de réception RLC comprend : à l'obtention des informations de configuration de délivrance hors séquence, le rétablissement immédiat par l'UE d'un paramètre de configuration de l'entité de réception RLC ; ou le rétablissement du paramètre de configuration de l'entité de réception RLC dans une période de modification suivant celle dans laquelle l'UE obtient les informations de configuration de délivrance hors séquence ; ou la détermination par l'UE d'un temps de rétablissement du paramètre de configuration de l'entité de réception RLC en fonction de l'instruction envoyée par le réseau.

13. Procédé selon la revendication 12, dans lequel le paramètre de configuration de l'entité de réception RLC est la taille d'une Fenêtre de Mémorisation de Délivrance Hors Séquence ; au rétablissement du paramètre de configuration de l'entité de réception RLC, comprenant en outre : la vérification si la taille de la Fenêtre de Mémorisation de Délivrance Hors Séquence actualisée est inférieure ou non à celle avant l'actualisation, si elle est plus petite, le rejet d'une Unité de Données de Protocole, PDU, dont le numéro de séquence est en dehors de la Fenêtre de Mémorisation de Délivrance Hors Séquence dans une mémoire tampon d'entité de réception RLC.

14. Procédé selon l'une quelconque des revendications 7 à 11, dans lequel la procédure de configuration d'une entité de réception RLC comprend : le rétablissement de l'entité de réception RLC en fonction des informations de configuration de délivrance hors séquence reçues.

15. Procédé selon la revendication 14, dans lequel la procédure de rétablissement de l'entité de réception RLC comprend :
à l'obtention des informations de configuration de délivrance hors séquence, le lancement immédiat par l'UE du rétablissement de l'entité de réception RLC ; ou le rétablissement de l'entité de réception RLC dans la période de modification suivant celle dans laquelle l'UE obtient les informations de configuration de délivrance hors séquence ; ou la détermination par l'UE du temps de rétablissement de l'entité de réception RLC en fonction de l'instruction envoyée par le réseau.

16. Procédé selon la revendication 14, dans lequel la procédure de rétablissement de l'entité de réception RLC comprend :
le rétablissement d'une variable d'état avec une valeur initiale ; le réglage du paramètre de configuration avec une valeur de configuration ; le réglage d'un Numéro d'Hyper Trame avec une valeur de configuration de couche supérieure ; le rejet de toutes les Unités de Données de Protocole de Données de Mode Non Acquittées, UMD PDU, dans l'entité RLC.

17. Procédé selon l'une quelconque des revendications 7 à 11, dans lequel le bloc d'informations système est un Bloc d'Informations Système de type 5 ou 5 bis.

18. Système de réception d'informations de commande de Service de Diffusion/Multidiffusion Multimédia, MBMS, comprenant un côté réseau et un Equipement Utilisateur, UE,
le côté réseau ayant des moyens configurés pour transférer un bloc d'informations système dans un canal de diffusion, le bloc d'informations système comportant des informations de configuration de Couche de Contrôle de Liaison Radio, RLC ; et l'UE ayant des moyens configurés , si l'UE sélectionne une nouvelle cellule, pour obtenir les informations de configuration RLC à la disposition de la novelle cellule depuis un bloc d'informations système mémorisé dans l'UE si le contenu d'un bloc d'informations système transféré depuis un côté réseau n'est pas changé ; lire et mémoriser le bloc d'informations système transféré depuis le côté réseau, et établir les informations de configuration RLC dans le bloc d'informations système transféré depuis le côté réseau comme informations de configuration RLC à la disposition de la nouvelle cellule, si le contenu du bloc d'informations système transféré depuis le côté réseau a changé ; et rétablir une entité de réception RLC en fonction des informations de configuration RLC à la disposition de la nouvelle cellule ; ou configuré pour recevoir les informations de configuration RLC incluses dans le bloc d'informations système transféré depuis le côté réseau si l'UE ne sélectionne pas une nouvelle cellule et des informations de configuration de délivrance hors séquence dans les informations de configuration RLC ont changé, et configurer l'entité de réception RLC en fonction des informations de configuration de délivrance hors séquence reçues.

19. Equipement Utilisateur, UE, pour recevoir des informations de commande de Service de Diffusion/Multidiffusion Multimédia, MBMS, comprenant :
un moyen de réception d'informations de configuration RLC ;
un moyen d'obtention des informations de configuration RLC à la disposition d'une nouvelle cellule à partir des informations de configuration RLC reçues ;
un moyen de configuration d'une entité de réception RLC ; et
dans lequel si l'UE ne sélectionne pas une nouvelle cellule et des informations de configuration de délivrance hors séquence dans les informations de configuration RLC ont changé, la configuration de l'entité de réception RLC en fonction des informations de configuration de délivrance hors séquence.

20. Equipement Utilisateur, UE, pour recevoir des informations de commande de Service de Diffusion/Multidiffusion Multimédia, MBMS, comprenant :
un moyen de sélection d'une nouvelle cellule ;
un moyen de vérification si le contenu d'un bloc d'informations système transféré depuis un côté réseau a changé ou non à la sélection de la nouvelle cellule ;
un moyen d'obtention d'informations de configuration de Couche de Commande de Liaison Radio, RLC, du bloc d'informations système mémorisé dans l'UE comme informations de configuration RLC à la disposition de la nouvelle cellule, si le contenu du bloc d'informations système transféré depuis le côté réseau n'a pas changé ; et
un moyen de lecture et de mémorisation du bloc d'informations système transféré depuis le côté réseau, et d'établissement des informations de configuration RLC dans le bloc d'informations système transféré depuis le côté réseau comme informations de configuration RLC à la disposition de la nouvelle cellule, si le contenu du bloc d'informations système transféré depuis le côté réseau a changé ;
un moyen de rétablissement d'une entité de réception RLC en fonction des informations de configuration RLC à la disposition de la nouvelle cellule.
